(19) Europäisches Patentamt
European Patent Office
Office européen des brevets

(11) **EP 4 488 947 A1**

(12) **EUROPEAN PATENT APPLICATION**

(43) Date of publication:
**08.01.2025 Bulletin 2025/02**

(21) Application number: **23183246.0**

(22) Date of filing: **04.07.2023**

(51) International Patent Classification (IPC):
**G06T 11/00** (2006.01)

(52) Cooperative Patent Classification (CPC):
**G06T 11/005;** G06T 2211/436

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Sirona Dental Systems GmbH
64625 Bensheim (DE)**
• **DENTSPLY SIRONA Inc.
York, PA 17401 (US)**

(72) Inventors:
• **BACHMANN, Oliver
64625 Bensheim (DE)**
• **Eichner, Stefan
64625 Bensheim (DE)**

(74) Representative: **Özer, Alpdeniz
Sirona Dental Systems GmbH
Corporate Legal
Fabrikstraße 31
64625 Bensheim (DE)**

(54) **COMPUTER-IMPLEMENTED METHOD FOR CORRECTING ARTEFACTS DUE TO ELECTROMAGNETIC DISTURBANCES CAUSED IN X-RAY PROJECTION IMAGES**

(57) The present invention relates to computer-implemented methods for correcting artefacts in x-ray projection images caused by electromagnetic disturbances on an x-ray detector (4) and for generating a corrected three-dimensional volume image or a corrected tomosynthesis based image or a corrected cephalometric image of a patient based on the artefact corrected projection images.

FIG. 11

**EP 4 488 947 A1**

**Description**

**TECHNICAL FIELD OF THE INVENTION**

The present invention relates to methods and systems for x-ray imaging of patients in the dental field. The present invention more particularly relates to extraoral x-ray imaging in which artefacts due to electromagnetic disturbances caused in x-ray projection images are suppressed in the reconstruction of three-dimensional (3D) volume images, tomosynthesis based images (panoramic images), and/or cephalometric (ceph) images.

**BACKGROUND ART OF THE INVENTION**

Volume images, tomosynthesis based images such as panoramic images, and ceph images are among the standard imaging procedures of all extraoral dental radiographic examinations. Volume images, tomosynthesis based images, and ceph images provide the dentist with information about the patient's dental condition. These images are used by dentists to diagnose problem cases and prepare for treatment.

Generally, an extraoral x-ray imaging system has an x-ray source and an x-ray detector that are rotated around the patient's head during the x-ray imaging. The trajectory of the x-ray source and the x-ray detector during the imaging can describe various paths. During the rotation, the x-ray detector acquires x-ray projection images of the patient. The panoramic image is generally reconstructed from the x-ray projection images using standard techniques such a shift-and-add or other techniques known to those skilled in the art. A panoramic image shows the structures located in a physical layer to be sharply viewed within the patient's jaw. The Volume image is generally reconstructed from the x-ray projection images using a standard technique such as the filtered back projection algorithm (e.g., the Feldkamp algorithm). The cheph image can be generated from the volume image. Alternatively, a separate x-ray detector on a cantilever arm can be used for generating a ceph image.

Ambient electromagnetic fields can adversely affect the proper functioning of the x-ray detector, its electrical components, and cabling, so that the acquired x-ray projection images may contain image artefacts due to the electromagnetic disturbances. These image artefacts may lead to misdiagnosis and incorrect therapies, which must, however, be avoided accordingly.

**SUMMARY OF THE INVENTION**

The inventors are not aware of any prior art technique in which the image artefacts due to electromagnetic disturbances are determined in a frequency domain of the Fourier transformed x-ray projections images, and then subsequently suppressed in the frequency domain or, alternatively, in the spatial domain accordingly to obtain artefact-corrected x-ray projection images for the reconstruction of a corrected three-dimensional volume image or a corrected tomosynthesis based image or a corrected ceph image.

Furthermore, the inventors are also not aware of any prior art technique in which the image artefacts due to electromagnetic disturbances are determined at least in a region of the x-ray projection image which has been obscured by the x-ray collimator (i.e., unexposed region of the acquired projection image), and subsequently suppressed in the spatial domain accordingly to obtain artefact-corrected x-ray projection images for the reconstruction of a corrected three-dimensional volume image or a corrected tomosynthesis based image or a corrected ceph image.

An objective of the present invention is to provide computer-implemented methods for reducing image artefacts in dental volume images and/or dental tomosynthesis based images and/or ceph images caused by electromagnetic interferences.

A further objective of the present invention is to provide an extraoral x-ray imaging system that performs the methods according to the present invention.

These objectives have been achieved by the computer-implemented methods as defined in any one of the claims 1, 5, and 8, and the x-ray imaging system as defined in claim 11. The subject-matters of the dependent claims define further developments and preferred embodiments.

The methods according to the present invention are computer-implemented methods and are each used to correct artefacts in x-ray projection images caused by electromagnetic disturbances on an x-ray detector. These methods are respectively used to generate a corrected three-dimensional volume image or a corrected tomosynthesis based image or a corrected ceph image of a patient.

According to a first aspect of the present invention the image artefacts due to electromagnetic disturbances are determined in a two-dimensional frequency domain of the Fourier transformed x-ray projections images, and then suppressed in the frequency domain.

According to this first aspect of the present invention the method comprises the steps of: providing one or more projection images by means of an x-ray source, an x-ray collimator and the x-ray detector, wherein each projection image is a two-dimensional data array which extends along a first direction and a second direction which is perpendicular to the first direction; Fourier transforming each projection image into a two-dimensional frequency domain; determining for each projection image the frequency components corresponding to the artefacts in the two-dimensional frequency domain; suppressing the determined frequency components in each corresponding Fourier transformed projection image in the two-dimensional frequency domain; Inverse Fourier transforming each suppressed projection image in the frequency domain to the two-dimensional spatial domain to obtain an artefact corrected projection image; reconstructing a corrected three-dimensional volume image or a corrected tomosynthesis based image or a corrected ceph image based on the artefact corrected projection images.

An advantageous effect of the present invention is that the artefact correction method reduces the risk of misdiagnosis and incorrect treatment, and avoids repeat exposures. The corrected three-dimensional volume image, the corrected tomosynthesis based image, and the corrected ceph image are substantially free of image artefacts such as ripples and the like.

According to the first aspect of the present invention, the x-ray projection images can be represented as a two dimensional data array, namely a matrix containing the image values. The matrix can correspond to the rows and columns of the x-ray detector. The Fourier transformation of the x-ray projection images are performed numerically as a discrete Fourier transformation with respect to the rows and the columns.

According to the first aspect of the present invention, the analysis of the frequency components in the two-dimensional frequency domain, has revealed that the frequency components are characteristically sorted into different ranges which are distinguishable. The first frequency range corresponds to the fundamental frequency. The second frequency range corresponds the frequencies caused by the x-ray collimator. The third frequency range corresponds to the frequencies caused by the artefacts. The fourth frequency range corresponds the frequencies caused by the patient anatomy. Thus, for each projection image the third frequency range can be distinguished from the others, e.g., by setting a mask or a filter that locates the frequency components corresponding to the artefacts in the two-dimensional frequency domain.

According to the first aspect of the present invention, the frequency components corresponding to the artefacts are set to zero in the two dimensional Fourier domain during the suppressing step.

The above mentioned advantageous effects can also be achieved accordingly through further alternative methods of the present invention. These alternative methods represent further aspects of the present invention, and are summarized below:

According to a second aspect of the present invention the image artefacts due to electromagnetic disturbances are determined in the frequency domain of the Fourier transformed x-ray projections images, but subsequently suppressed in the spatial domain to obtain artefact corrected x-ray projection images for the reconstruction of a corrected three-dimensional volume image or a corrected tomosynthesis based image or a ceph image.

According to the second aspect of the present invention the method comprises: a providing step in which the projection images are provided by means of an x-ray source, an x-ray collimator and the x-ray detector, wherein each projection image is a two-dimensional data array which extends along a first direction and a second direction which is perpendicular to the first direction; a summing step in which the image values in the plurality of one-dimensional data arrays of each projection image, each along the first direction, are respectively summed up to form a plurality of amplitudes; a Fourier transforming step in which the plurality of amplitudes along the second direction, resulting from the preceding summing step are Fourier transformed into one-dimensional frequency components so as to form a one-dimensional frequency domain; a determining step in which for each projection image the frequency components corresponding to the artefacts in the one-dimensional frequency domain are determined; an inverse Fourier transforming step in which the frequency components determined in the determining step are inverse Fourier transformed to the one-dimensional spatial domain; a suppressing step in which the inverse Fourier transformed frequency components are suppressed in the corresponding projection image to obtain an artefact corrected projection image; a reconstructing step in which a corrected three-dimensional volume image or a corrected tomosynthesis based image or a corrected ceph image is reconstructed based on the artefact corrected projection images.

According to the second aspect of the present invention, when analyzing the frequency components of the one-dimensional frequency domain, it has been found that the frequency components characteristically sort them into different ranges which are distinguishable. The first frequency range corresponds the fundamental frequency of the projection image. The second frequency range corresponds to the frequencies due to the x-ray collimator. The third frequency range corresponds to the frequencies due to the artefacts. The fourth frequency range corresponds the frequencies caused by the patient anatomy. Thus, for each projection image the third frequency range can be distinguished from the others, e.g., by setting a mask or a filter that locates the frequency components corresponding to the artefacts in in the frequency domain.

According to the second aspect of the present invention, the inverse Fourier transformed frequency components due to the artefacts are entirely subtracted from the corresponding projection image.

According to a third aspect of the present invention, the image artefacts due to electromagnetic disturbances are determined at least in a region of the x-ray projection image which has been obstructed by the x-ray collimator, and are suppressed in the spatial domain accordingly to obtain artefact corrected x-ray projection images for the reconstruction of a corrected three-dimensional volume image or a corrected tomosynthesis based image or a corrected ceph image.

According to the third aspect of the present invention the method comprises the steps of: providing the projection images by means of an x-ray source, an x-ray collimator and the x-ray detector; determining for each projection image the spatial components corresponding to the artefacts in the two-dimensional spatial domain respectively, wherein the spatial components corresponding to the artefacts are determined in one or more separate regions of the projection image which has been obscured by the x-ray collimator; suppressing the artefacts by subtracting the determined spatial components corresponding to the artefact from the corresponding projection image to obtain an artefact corrected projection image, wherein in the suppressing step the determined artefacts are subtracted at least from one or more regions in the corresponding projection image which has *not* been obscured by the x-ray collimator; reconstructing a corrected three-dimensional volume image or a corrected tomosynthesis based image or a corrected ceph image based on the artefact corrected projection images.

According to the third aspect of the present invention, depending on the local orientation of the electromagnetic noise source, the amplitude of the artefacts may spatially vary over the projection images. This antitropy of the electromagnetic disturbance can be detected by comparing the amplitudes of the artefacts in the regions of the projection image which has been obscured by the x-ray collimator. In case of such anisotropy the artefacts determined in said one or more separate regions of the projection image which has been obscured by the x-ray collimator, are preferably weighed, and then subtracted at least from one or more regions in the corresponding projection image which has not been obstructed by the x-ray collimator. By the weighing process, the artifact correction of the projection images can be more effectively adapted to the actual electromagnetic disturbance pattern/profile.

**BRIEF DESCRIPTION OF THE DRAWINGS**

In the following description, the present invention will be explained in more detail with reference to the exemplary embodiments and with reference to the drawings, wherein.

Fig. 1 - shows a schematic drawing of an x-ray imaging system according to an embodiment according to the preset invention;

Fig. 2A - shows a flowchart of a computer-implemented method according to a first embodiment according to the preset invention;

Fig. 2B - shows a flowchart of a computer-implemented method according to a second embodiment according to the preset invention;

Fig. 2C - shows a flowchart of a computer-implemented method according to a third embodiment according to the preset invention;

Fig. 3 - shows an x-ray projection image having artefacts caused by electromagnetic disturbances on an x-ray detector;

Fig. 4 - shows an x-ray projection image which has been Fourier transformed into the two-dimensional frequency domain according the first embodiment of the preset invention;

Fig. 5 - shows the frequency components corresponding to the artefacts in the two-dimensional frequency domain of Fig. 4, after the DC noise has been removed for ease of illustration;

Fig. 6 - shows the Fourier transformed projection image in the two-dimensional frequency domain of Fig. 5 after the frequency components corresponding to the artefacts have been suppressed;

Fig. 7 - shows an artefact corrected x-ray projection image obtained by inverse Fourier transforming the artefact suppressed Fourier transformed projection image of Fig. 6;

Fig. 8 - shows a graphically augmented flowchart of the computer-implemented method according to the second embodiment of the present invention;

Fig. 9A - shows various exposed and unexposed regions of a projection image to be artifact corrected according to the computer-implemented method according to the third embodiment of the present invention;

Fig. 9B - shows a graphically augmented flowchart of the computer-implemented method according to a variation of the third embodiment of the present invention;

Fig. 10 - shows a tomosynthesis based image according to the prior art which has been reconstructed using x-ray projection images having artefacts caused by electromagnetic disturbances, wherein the artefacts are visually conspicuous;

Fig. 11 - shows a corrected tomosynthesis based image obtained through reconstruction of the artefact corrected projection images as shown in Fig. 7.

The reference numbers shown in the drawings designate the elements listed below, which are referred to in the following description of the exemplary embodiments.

1. X-ray imaging system
2. X-ray imaging device
3. X-ray source
4. X-ray detector
5. Operating unit (user interface)
6. Head fixation
7. Bite block
8. Computing unit (Computer)
9. Display device (Screen)
10. Input device (Keyboard)
11. Input device (Mouse)

I: X-ray projection image
X: First direction
Y: Second direction
Z: Third direction

**DETAILED DESCRIPTION OF THE EMBODIMENTS**

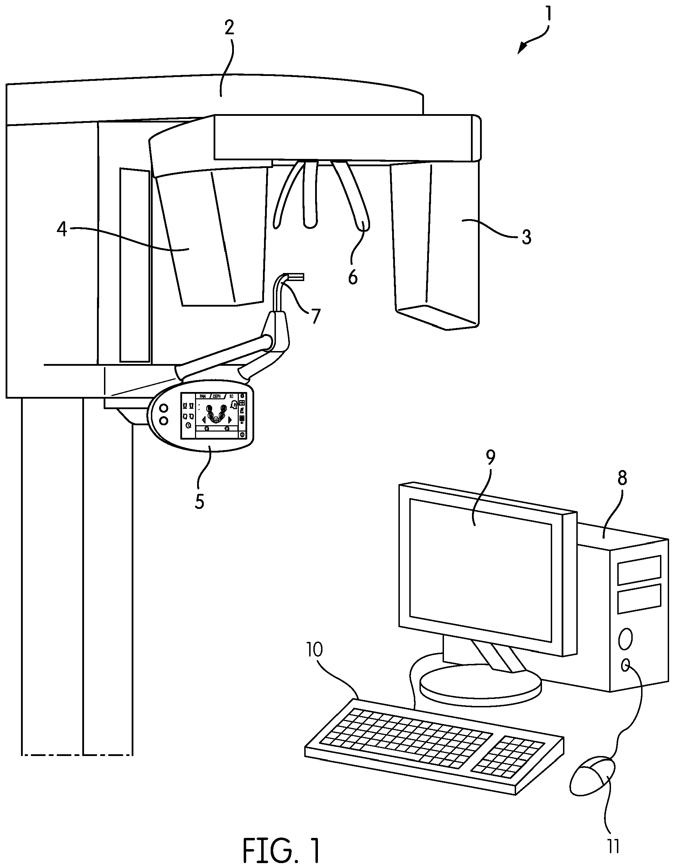

In the following description, an x-ray imaging system (1) and alternative x-ray imaging methods according to the present invention will be explained in more detail. These methods are computer-implemented methods and can be carried out on a computer-implemented x-ray imaging system (1) as schematically shown in an embodiment in Fig. 1.

The present invention also includes corresponding computer programs having computer-readable codes respectively implementing these methods. The computer programs are provided on computer readable storage media (not shown) accessible to the computerized x-ray imaging system (1). In the following description, the x-ray imaging system (1) will be explained in more detail.

*The X-ray imaging system*

The computerized x-ray imaging system (1) (hereinafter shortly referred to as the system (1)) comprises an x-ray imaging device (2) for performing patient dental imaging. The x-ray device (1) has different dental imaging modalities such as volume imaging, panoramic imaging, and ceph imaging.

The x-ray system (1) is preferably configurable as an IoT system which can be bidirectionally connected via a local area network and/or the Internet (not shown) to other dental devices such as optical intraoral scanners (not shown), dental milling machines (not shown), additive manufacturing machines (not shown), and the like for data exchange, remote control, cloud computing, and the like.

The x-ray device (2) has an x-ray source (3), an x-ray collimator (not shown), and an x-ray detector (4) that are rotated around the patient's head during the imaging by means of a driving mechanism (not shown). The x-ray system (1) may also have an additional x-ray-detector on a cantilever arm (not shown) for acquiring one or more x-ray projection images for cephalometric imaging.

The trajectory of the x-ray source (3) and the x-ray detector (4) during the imaging can describe a circular path. However, it can also assume a form deviating from this. If at least some actuators (not shown) of the driving mechanism are controlled simultaneously, a trajectory deviating from a pure circular path around the patient's head can be achieved.

The patient's head can be optionally positioned in the x-ray device (2) with a bite block (6) and/or a head fixation (7).

The various possible trajectories *(course)* of the x-ray source (3) and the x-ray detector (4) with respect to the bite block (7) and the head fixation (6) are calibrated for the system (1).

The x-ray detector (4) detects the x-rays emitted by the x-ray source (3) during the rotation. The x-ray projection images (I) are acquired, namely read out from the x-ray detector (4) in synchronization with x-ray source (3) and the driving mechanism.

The computerized x-ray system (1) comprises an operating unit (5) such as a user interface, a computing unit (8) such as a computer (8) which can be connected to the x-ray device (2), a display device (9) such as a screen for visualizing data sets, and input devices such as a keyboard (10) and a mouse (11). The operating unit (5) can be connected to x-ray system (1) through wireless or alternatively through a wire communication. The operating unit (5) has a display, preferably with a touchscreen for controlling, setting and operation of the x-ray device (2).

The computer (8) may be connected to the x-ray device (2) through a wired or alternatively through a wireless communication via a local area network (not shown) or, alternatively, via the Internet. The computer (8) may be also part of a cloud. Alternatively, the computer (8) may be integrated into the x-ray device (2). Alternatively, all or some of the computations of the computer-implemented methods may take place in the cloud as cloud computing.

The screen (9) may be provided spatially separate from or integrated with the x-ray device (2). Preferably, the computer (8) may also be used to control all functions, settings, and operation of the x-ray device (2). Alternatively, one or more computers (8) may be used for controlling the setting and operation of the x-ray system (1).

The computer (8) executes the computer program and provides the data sets, e.g., the projection images, the three-dimensional volume images or tomosynthesis based images or ceph images for visualization on the screen (9).

### *X-ray imaging methods for Artefact Correction*

### *1st Embodiment*

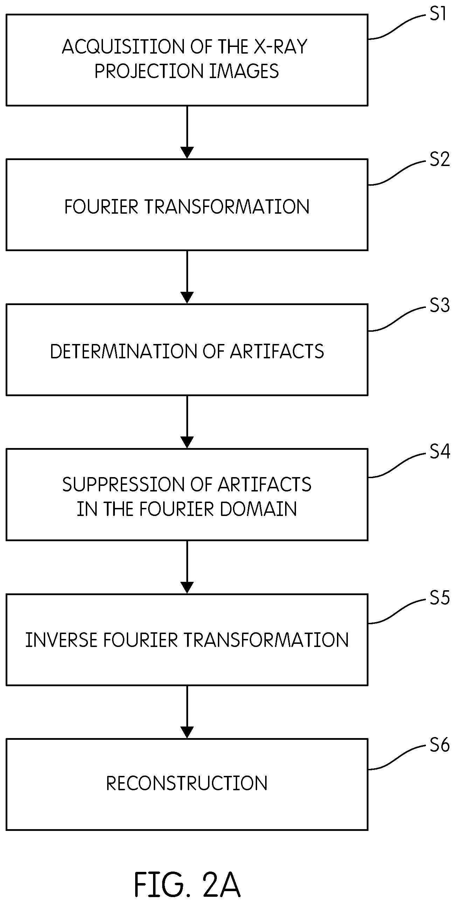

A flowchart of a method according to the first embodiment for correction of artefacts due to electromagnetic disturbances (herein shortly referred to as "artefacts") caused in x-ray projection images is shown in Fig. 2A.

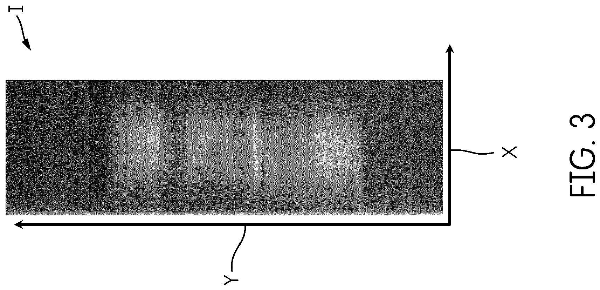

In step (S 1), the x-ray projection images (I) as shown in Fig. 3 are acquired by means of the x-ray source (3), the x-ray collimator and the x-ray detector (4) of the x-ray system (1). Each x-ray projection image (I) (herein also shortly referred to "projection image") is a two-dimensional data array which extends along a first direction (x) and a second direction (y) which is perpendicular to the first direction. The first direction (x) and the second direction (y) are preferably aligned with the rows and columns of the x-ray detector (4).

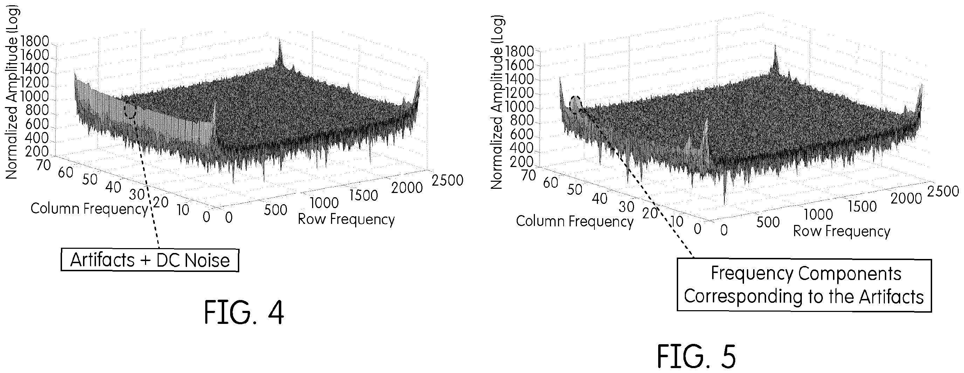

In step (S2), each projection image is Fourier transformed into a two-dimensional frequency domain as shown in Fig. 4 (see eq. 1 below). In the Fourier transforming step (S2), the plurality of one-dimensional data arrays of the projection image, each along the first direction (x), are respectively Fourier transformed into a plurality of one-dimensional frequency components each along the first direction (x). Subsequently, the plurality of one-dimensional frequency components, each along the second direction (y), resulting from the preceding step, are Fourier transformed into a plurality of one-dimensional frequency components each along the second direction (y) so as to form a two-dimensional frequency domain. Eq. 1 is:

$$\hat{a}_{k,l} = \sum_{m=0}^{M-1} \sum_{n=0}^{N-1} a_{m,n} \cdot e^{-2\pi i \frac{mk}{M}} \cdot e^{-2\pi i \frac{nl}{N}}$$

Wherein $k = 0, \ldots, M - 1$ and $l = 0, \ldots, N - 1$. Wherein the x-ray projection images can be represented as a two-dimensional data array, namely as matrix with size M times N including the image values $a_{m,n}$ in the spatial domain. And $\hat{a}_{k,l}$ denotes the image values in the frequency domain. The matrix can be coincided with the rows (M) and columns (N) of the x-ray detector (4).

In step (S3), for each projection image the frequency components corresponding to the artefacts in the two-dimensional frequency domain are determined. The frequency components corresponding to the artefacts are shown in Fig. 5 by the dashed line. The DC noise has been optionally removed for better illustration. In the determining step (S3), the frequency components of the two-dimensional frequency domain are sorted increasingly according to their frequencies so as to correspond to at least four frequency ranges. The artifacts can be identified as those frequency components in the 3rd frequency range, viewed from the counting direction from lowest to the highest frequency range. The first frequency range comprises the fundamental frequency of the projection image. The second frequency range comprises the frequencies due to the x-ray collimator. The third frequency range comprises the frequencies due to the artefacts. The fourth frequency range comprises the frequencies due the patient anatomy. Herein, for each projection image the third frequency range is determined to correspond to the artefacts in the two-dimensional frequency domain. The identification of the artefacts can be implemented by using a mask for the first column in Fig. 5. As a result, the first column represent the low frequency part and allows to identify the fundamental frequency, and the spectral range due the collimator and the patient anatomy. wherein the rest allows to identify the spectral range for the artefacts.

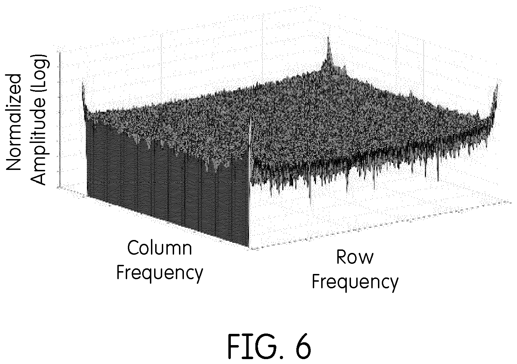

In step (S4), the determined frequency components in the corresponding Fourier transformed projection image are suppressed in the two-dimensional frequency domain as shown in Fig. 6. In the suppressing step (S4), the frequency components corresponding to the artefacts are preferably set to zero. Wherein $\hat{\acute{a}}_{k,l}$ denotes the image values in the frequency domain after suppression of the artefacts in $\hat{a}_{k,l}$.

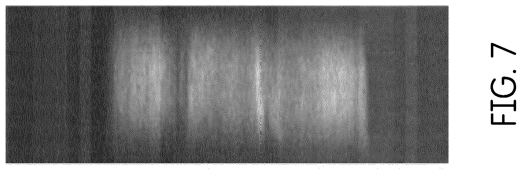

In step (S5), the suppressed projection images in the frequency domain are inverse Fourier transformed to the two-dimensional spatial domain to obtain the artefact-corrected projection images as shown in Fig. 7.

$$\acute{a}_{m,n} = \frac{1}{MN} \sum_{k=0}^{M-1} \sum_{l=0}^{N-1} \hat{\acute{a}}_{k,l} \, e^{2\pi i \frac{mk}{M}} e^{2\pi i \frac{nl}{N}}$$

Wherein $m = 0, \ldots, M - 1$ and $n = 0, \ldots, N - 1$. Wherein $\acute{a}_{m,n}$ denotes the artefact-corrected projection image.

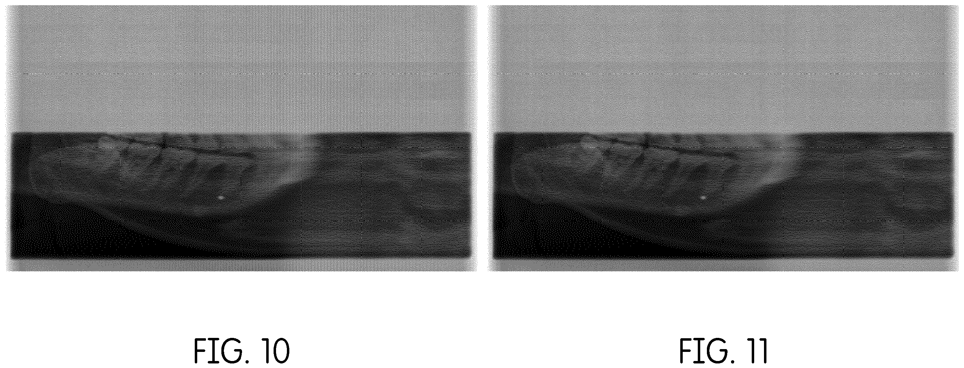

In step (S6), a corrected three-dimensional volume image or a corrected tomosynthesis based image or a corrected ceph image is reconstructed based on the artefact corrected projection images. As an example, the corrected tomosynthesis based image is shown in Fig. 11. For comparison, a tomosynthesis based image according to the prior art is shown in Fig 10. The tomosynthesis based image of Fig. 10 has been reconstructed by using x-ray projection images having artefacts caused by electromagnetic disturbances. The artefacts are visually conspicuous (see ripple shaped structures). In contrast thereto, the artefacts are substantially reduced, thus corrected as seen in Fig. 11.

### $2^{nd}$ *Embodiment*

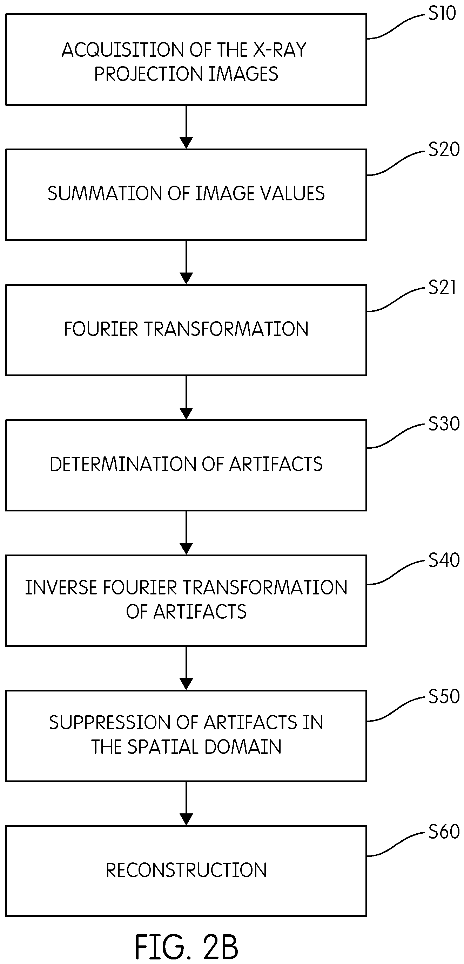

An artefact correction method according to the second embodiment is shown in Fig. 2B.

In step (S10), the x-ray projection images (I) as shown in Fig. 3 are acquired by means of the x-ray source (3), the x-ray collimator and the x-ray detector (4) of the x-ray system (1). Each x-ray projection image (I) is a two-dimensional data array which extends along a first direction (x) and a second direction (y) which is perpendicular to the first direction. The first direction (x) and the second direction (y) are preferably aligned with the rows and columns of the x-ray detector (4).

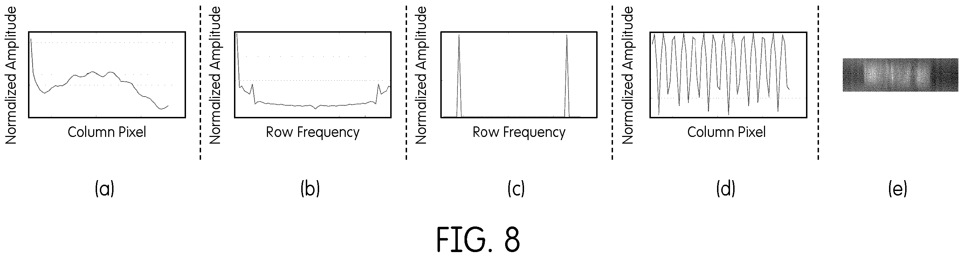

In step (S20), a summing operation is performed. In Step (20), the image values in the plurality of one-dimensional data arrays of the projection image, each along the first direction (x), are respectively summed up to form a plurality of amplitudes. This is shown in the first frame (a) of Fig. 8. This can be described as follows:

$$A_m = \sum_{n=0}^{N-1} a_{m,n} \omega^{mn} = a_{m,0} + a_{m,1} + a_{m,2} + \cdots + a_{m,N-1}$$

$$\omega := e^{-2\pi i/4}$$

Wherein $a_{m,n}$ represents the image value in the data array (M x N) of the projection image along long the first direction (x). And $A_m$ represents the amplitudes along the second direction (y) which result after the summation.

In step (S21), the plurality of amplitudes along the second direction (y), resulting from the preceding summing step (S20) are Fourier transformed into one-dimensional frequency components so as to form a one-dimensional frequency domain. This is shown in the second frame (b) of Fig. 8.

$$\hat{A}_k = \sum_{m=0}^{M-1} A_m \omega^{\frac{mk}{M}}$$

In step (S30) for each projection image the frequency components corresponding to the artefacts in the one-dimensional frequency domain are determined. This is schematically shown in the third frame (c) of Fig. 8. In step (S30), the frequency components of the one-dimensional frequency domain are sorted increasingly according to their frequencies so as to correspond to at least four frequency ranges. The first frequency range comprises the fundamental frequency of the projection image. The second frequency range comprises the frequencies due to the x-ray collimator. The third frequency range comprises the frequencies due to the artefacts. The fourth frequency range comprises the frequencies due the patient anatomy. Herein, for each projection image the third frequency range is determined to correspond to the artefacts in the spatial domain. Wherein $\hat{A}_k$ are the artefacts.

Artifacts are identified as the frequency components in the 3rd frequency range, viewed from the counting direction from lowest to the highest frequency range. This can be implemented as above by using a mask which identifies the fundamental frequency and the spectral range due the collimator and the patient anatomy. The rest is identified as the spectral range for the artefacts.

In step (S40), the frequency components determined in the determining step (S30) are inverse transformed to the one-dimensional spatial domain. This is shown in the fourth frame (d) of Fig. 8.

$$\acute{A}_m = \frac{1}{M} \sum_{k=0}^{M-1} \hat{A}_k \omega^{\frac{mk}{M}}$$

In step (S50), the inverse Fourier transformed frequency components in step (S40) are suppressed in the corresponding projection image. This is shown in the last frame (e) of Fig. 8.

In the suppressing (S50) step, the inverse Fourier transformed frequency components in step (S40) are subtracted column wise from the corresponding projection image to obtain an artefact corrected projection image.

In step (S60) step, a corrected three-dimensional volume image or a corrected tomosynthesis based image or a corrected ceph image based on the artefact corrected projection images is reconstructed.

### 3rd Embodiment

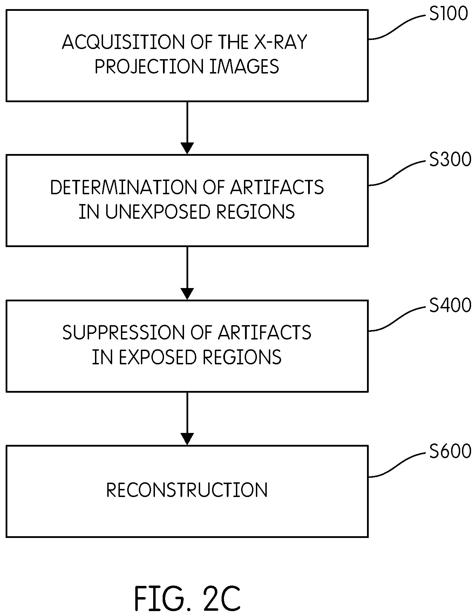

An artefact correction method according to the third embodiment is shown in Fig. 2C.

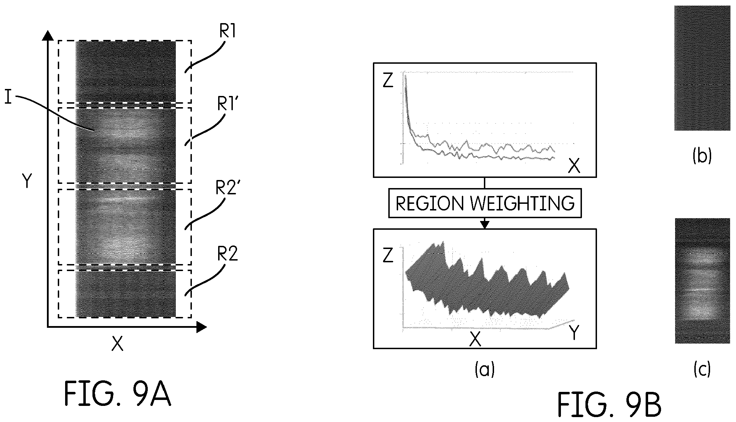

In step (S100), the x-ray projection images (I) as shown in Fig. 3 (see also Fig. 9A) are acquired by means of the x-ray source (3), the x-ray collimator and the x-ray detector (4) of the x-ray system (1). Each x-ray projection image (I) is a two-dimensional data array which extends along a first direction (x) and a second direction (y) which is perpendicular to the first direction. The first direction (x) and the second direction (y) are preferably aligned with the row and column direction of the x-ray detector (4).

In step (S300) for each projection image (I), the spatial components corresponding to the artefacts are determined in the two-dimensional spatial domain respectively, wherein specifically the spatial components corresponding to the artefacts are determined in one or more separate regions (R1; R2) of the projection image as shown in Fig. 9A, which have been obscured by the x-ray collimator. The dashed lines show example regions which have been (see R1; R2) and have not been (see R1'; R2') obstructed by the x-ray collimator.

In step (S400), the determined spatial components corresponding to the artefact are suppressed by subtracting them from the corresponding projection image. In particular, in the suppressing step (S400) the determined artefacts are subtracted at least from one or more regions (R1', R2') as shown in Fig. 9A in the corresponding projection image which has not been obstructed by the x-ray collimator.

In step (S600), a corrected three-dimensional volume image or a corrected tomosynthesis based image or a corrected ceph image is reconstructed based on the artefact corrected projection images.

### Weighing of Artefacts

In a variation of the third embodiment, the artefacts are weighted. In the determining step (S300), the spatial components corresponding to the artefacts determined in said one or more separate regions (R1, R2) are weighted as shown in part (a) of Fig 9B.

In the subtracting step (S400), the weighted artefacts are subtracted at least from one or more regions (R1', R2') in the corresponding projection image which has not been obstructed by the x-ray collimator.

In Fig. 9B an example for the weighing has been illustrated graphically for a random electromagnetic disturbance profile. According thereto, the spatial components corresponding to the artefacts in one or more regions (R1',R2') are weighted e.g, summed up on the unexposed region in the second direction (y), and interpolated towards the exposed region of the projection image in the second direction (y). Depending on the local orientation of the electromagnetic noise source, the effect of the amplitude of the artefact may vary spatially. Therefore, the interpolation between the opposed unexposed regions can be performed linearly and/or non-linearly, and can preferably assume decreasing/increasing amplitude value (third direction (z)) in view of the mentioned orientation of the electromagnetic noise source. The third direction (z) is perpendicular to both the first and the second direction and denotes the image / artefact Amplitude.

**Claims**

1.  Computer-implemented method for correcting artefacts in x-ray projection images caused by electromagnetic disturbances on an x-ray detector (4) and for generating a corrected three-dimensional volume image or a corrected tomosynthesis based image or a corrected cephalometric image of a patient, comprising the steps of:

    providing (S1) one or more projection images by means of an x-ray source (3), an x-ray collimator and the x-ray detector (4), wherein each projection image is a two-dimensional data array which extends along a first direction and a second direction which is perpendicular to the first direction;
    **characterized by** further comprising the steps of:

    Fourier transforming (S2) each projection image into a frequency domain;
    determining (S3) for each projection image the frequency components corresponding to the artefacts in the two-dimensional frequency domain;
    suppressing (S4) the determined frequency components in the corresponding Fourier transformed projection image in the two-dimensional frequency domain;
    Inverse Fourier transforming (S5) the suppressed projection images in the frequency domain to the two-dimensional spatial domain to obtain artefact corrected projection images;
    reconstructing (S6) a corrected three-dimensional volume image or a corrected tomosynthesis based image or a corrected ceph image based on the artefact corrected projection images.

2.  The computer-implemented method according to claim 1, **characterized in that** in the Fourier transforming step (S2),

    the plurality of one-dimensional data arrays of the projection image, each along the first direction, are respectively Fourier transformed into a plurality of one-dimensional frequency components each along the first direction, and the plurality of one-dimensional frequency components, each along the second direction, resulting from the preceding step, are Fourier transformed into a plurality of one-dimensional frequency components each along the second direction so as to form a two-dimensional frequency domain.

3.  The computer-implemented method according to claim 2, **characterized in that**

    in the determining step (S3), the frequency components of the two-dimensional frequency domain are sorted increasingly according to their frequencies so as to correspond to at least four frequency ranges,
    wherein the first frequency range comprises the fundamental frequency of the projection image,
    wherein the second frequency range comprises the frequencies due to the x-ray collimator,
    wherein the third frequency range comprises with the frequencies due to the artefacts,
    wherein the fourth frequency range comprises the frequencies due the patient anatomy, and
    wherein for each projection image the third frequency range is selected by a mask and determined to correspond to the artefacts in the two-dimensional frequency domain.

4.  The computer-implemented method according to claim 3, **characterized in that** in the suppressing step (S4), the frequency components corresponding to the artefacts are set to zero.

5.  Computer-implemented method for correcting artefacts in x-ray projection images caused by electromagnetic disturbances on an x-ray detector (4) and for generating a corrected three-dimensional volume image or a corrected tomosynthesis based image or a corrected cephalometric image of a patient, comprising the steps of:

    providing (S10) one or more projection images by means of an x-ray source (3), an x-ray collimator and the x-ray detector (4), wherein each projection image is a two-dimensional data array which extends along a first direction and a second direction which is perpendicular to the first direction;
    **characterized by** further comprising:

    a summing step (S20) in which the image values in the plurality of one-dimensional data arrays of each projection image, each along the first direction, are respectively summed up to form a plurality of amplitudes, and

a Fourier transforming step (S21) in which the plurality of amplitudes along the second direction, resulting from the preceding summing step (S20) are Fourier transformed into one-dimensional frequency components so as to form a one-dimensional frequency domain;

a determining step (S30) in which for each projection image the frequency components corresponding to the artefacts in the one-dimensional frequency domain are determined;

an inverse Fourier transforming (S40) in which the frequency components determined in the determining step (S30) are inverse transformed to the one-dimensional spatial domain;

a suppressing step (S50) in which the inverse Fourier transformed frequency components in step (S40) are suppressed in the corresponding projection image to obtain artefact corrected projection images;

a reconstructing (S60) step in which a corrected three-dimensional volume image or a corrected tomosynthesis based image or a corrected ceph image based on the artefact corrected projection images is reconstructed.

6. The computer-implemented method according to claim 5, **characterized in that**

in the determining step (S30), the frequency components of the one-dimensional frequency domain are sorted increasingly according to their frequencies so as to correspond to at least four frequency ranges,

wherein the first frequency range comprises the fundamental frequency of the projection image,

wherein the second frequency range comprises the frequencies due to the x-ray collimator,

wherein the third frequency range comprises with the frequencies due to the artefacts,

wherein the fourth frequency range comprises the frequencies due the patient anatomy, and

wherein for each projection image the third frequency range is selected by a mask and determined to correspond to the artefacts in the frequency domain.

7. The computer-implemented method according to claim 6, **characterized in that** in the suppressing (S50) step, the inverse Fourier transformed frequency components in step (S40) are subtracted from the corresponding projection image.

8. Computer-implemented method for correcting artefacts in x-ray projection images caused by electromagnetic disturbances on an x-ray detector (4) and for generating a corrected three-dimensional volume image or a corrected tomosynthesis based image or a corrected cephalometric image of a patient, comprising the steps of:

providing (S100) one or more projection images by means of an x-ray source (3), an x-ray collimator and the x-ray detector (4);

**characterized by** further comprising the steps of:

determining (S300) for each projection image the spatial components corresponding to the artefacts in the two-dimensional spatial domain respectively, wherein the spatial components corresponding to the artefacts are determined in one or more separate regions (R1, R2) of the projection image which has been obscured by the x-ray collimator;

suppressing (S400) the artefacts by subtracting the determined spatial components corresponding to the artefact from the corresponding projection image to obtain an artefact corrected projection image, wherein in the suppressing step (S400) the determined artefacts are subtracted at least from one or more regions (R1', R2') in the corresponding projection image which has not been obscured by the x-ray collimator;

reconstructing (S600) a corrected three-dimensional volume image or a corrected tomosynthesis based image or a corrected ceph image based on the artefact corrected projection images.

9. The computer-implemented method according to claim 8, **characterized in that** in the determining step (S300) the spatial components corresponding to the artefacts determined in said one or more separate regions (R1, R2) are weighted, and in the subtracting step (S400) the said weighted artefacts are subtracted at least from one or more regions (R1', R2') in the corresponding projection image which has not been obstructed by the x-ray collimator.

10. A computer program comprising computer-readable code which, when executed by a computer-assisted x-ray imaging system (1), causes said system (1) to perform the method of any one of the preceding claims.

11. A computer-assisted x-ray imaging system (1) comprising a computing unit (8) configured to execute the computer program according to claim 10.

FIG. 1

```
┌────────────────────────────────┐
│   ACQUISITION OF THE X-RAY      │──── S1
│      PROJECTION IMAGES          │
└────────────────────────────────┘
                │
                ▼
┌────────────────────────────────┐
│     FOURIER TRANSFORMATION      │──── S2
└────────────────────────────────┘
                │
                ▼
┌────────────────────────────────┐
│    DETERMINATION OF ARTIFACTS   │──── S3
└────────────────────────────────┘
                │
                ▼
┌────────────────────────────────┐
│    SUPPRESSION OF ARTIFACTS     │──── S4
│      IN THE FOURIER DOMAIN      │
└────────────────────────────────┘
                │
                ▼
┌────────────────────────────────┐
│  INVERSE FOURIER TRANSFORMATION │──── S5
└────────────────────────────────┘
                │
                ▼
┌────────────────────────────────┐
│        RECONSTRUCTION           │──── S6
└────────────────────────────────┘
```

FIG. 2A

```
┌─────────────────────────────────┐
│   ACQUISITION OF THE X-RAY      │── S10
│      PROJECTION IMAGES          │
└─────────────────────────────────┘
                │
                ▼
┌─────────────────────────────────┐
│   SUMMATION OF IMAGE VALUES     │── S20
└─────────────────────────────────┘
                │
                ▼
┌─────────────────────────────────┐
│     FOURIER TRANSFORMATION      │── S21
└─────────────────────────────────┘
                │
                ▼
┌─────────────────────────────────┐
│   DETERMINATION OF ARTIFACTS    │── S30
└─────────────────────────────────┘
                │
                ▼
┌─────────────────────────────────┐
│  INVERSE FOURIER TRANSFORMATION │── S40
│         OF ARTIFACTS            │
└─────────────────────────────────┘
                │
                ▼
┌─────────────────────────────────┐
│   SUPPRESSION OF ARTIFACTS IN   │── S50
│       THE SPATIAL DOMAIN        │
└─────────────────────────────────┘
                │
                ▼
┌─────────────────────────────────┐
│        RECONSTRUCTION           │── S60
└─────────────────────────────────┘
```

FIG. 2B

```
┌─────────────────────────────┐
│  ACQUISITION OF THE X-RAY   │── S100
│     PROJECTION IMAGES       │
└─────────────────────────────┘
               │
               ▼
┌─────────────────────────────┐
│  DETERMINATION OF ARTIFACTS │── S300
│     IN UNEXPOSED REGIONS    │
└─────────────────────────────┘
               │
               ▼
┌─────────────────────────────┐
│   SUPPRESSION OF ARTIFACTS  │── S400
│     IN EXPOSED REGIONS      │
└─────────────────────────────┘
               │
               ▼
┌─────────────────────────────┐
│                             │── S600
│        RECONSTRUCTION       │
└─────────────────────────────┘
```

# FIG. 2C

FIG. 3

FIG. 5

FIG. 4

FIG. 6

FIG. 7

FIG. 8

FIG. 9B

FIG. 9A

FIG. 10

FIG. 11

Europäisches
Patentamt

European
Patent Office

Office européen
des brevets

**PARTIAL EUROPEAN SEARCH REPORT**

under Rule 62a and/or 63 of the European Patent Convention.
This report shall be considered, for the purposes of
subsequent proceedings, as the European search report

**Application Number**

EP 23 18 3246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2013 138803 A (ASAHI ROENTGEN IND) 18 July 2013 (2013-07-18) * the whole document * ----- | 1-4,10, 11 | INV. G06T11/00 |

**TECHNICAL FIELDS SEARCHED    (IPC)**

G06T

## INCOMPLETE SEARCH

The Search Division considers that the present application, or one or more of its claims, does/do
not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Munich | 11 March 2024 | Werling, Alexander |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04E07)

Europäisches
Patentamt

European
Patent Office

Office européen
des brevets

**INCOMPLETE SEARCH
SHEET C**

Application Number

EP 23 18 3246

Claim(s) searched incompletely:
    1-4, 10, 11

Reason for the limitation of the search:

Present claims 1-4 relate to a computer-implemented method which has a given desired property or effect, namely to correct artefacts by determining/suppressing the frequency components of said artefacts in Fourier space.
Filtering a signal, in this case an image, by Fourier domain processing is a technique well known in the art which is covered by entire textbooks and also a CPC class, i. e. G06T5/10. Therefore, the problem addressed by the invention, namely the removal of artefacts caused by electromagnetic disturbances, essentially consists of determining their corresponding frequency components in Fourier space, i. e. the "third frequency range" of claim 3. Once these components being known, their removal in Fourier space is trivial.
However, the description does not provide support and disclosure within the meaning of Articles 84 and 83 EPC for any such determining step having the said property or effect and there is no common general knowledge of this kind available to the person skilled in the art. The only disclosure relating to the determining step is on p. 12, l. 5-22 which is a qualitative description of fig. 5, showing frequency components corresponding to artefacts. However, no computer-implemented method allowing for some automatic processing is provided, as required by claims 1-4, thus giving rise to an objection under Art. 83 for lack of sufficient disclosure and Art. 84 for lack of support.
The same remarks also apply by analogy to corresponding independent claims 10 and 11.

This non-compliance with the substantive provisions is such that a meaningful search of the whole claimed subject-matter of the claims can not be carried out (Rule 63 EPC and Guidelines B-VIII, 3).
In reply to the invitation to file a statement indicating the subject-matter to be searched, the applicant failed to provide the requested information in due time.

Pursuant to Rule 63(2) EPC), the search of claims 1-4, 10 and 11 was consequently restricted to the broad concept of a method having the desired property or effect, namely 2D tomographic projection filtering in Fourier space.

The applicant's attention is drawn to the fact that the application will be further prosecuted on the basis of subject-matter for which a search has been carried out and that the claims should be limited to that subject-matter at a later stage of the proceedings (Rule 63(3) EPC).

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-4, 10, 11

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

    1. claims: 1-4, 10, 11

        Correction of artefacts in X-ray projection images through 2D Fourier domain filtering.
            - - -

    2. claims: 5-7

        Correction of artefacts in X-ray projection images through 1D Fourier domain filtering of detector row/column sums.
            - - -

    3. claims: 8, 9

        Correction of artefacts in X-ray projection images through spatial domain subtraction of artefact components determined from collimated regions.
            - - -

## ANNEX TO THE EUROPEAN SEARCH REPORT
## ON EUROPEAN PATENT APPLICATION NO.

EP 23 18 3246

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2024

| Patent document cited in search report | Publication date | Patent family member(s) | Publication date |
|---|---|---|---|
| JP 2013138803 A | 18-07-2013 | NONE | |

For more details about this annex : see Official Journal of the European Patent Office, No. 12/82